# EUROPEAN PATENT APPLICATION

(11) **EP 4 597 351 A1**
(43) Date of publication of application: **06.08.2025**
(21) Application number: 25152079.7
(22) Date of filing: 15.01.2025
(51) Int. Cl.: G06F 30/27, G06F 30/394

(54) **METHOD AND DEVICE WITH CROSS-NETWORK SEMICONDUCTOR DESIGN**

(30) Priority: 31.01.2024 KR 20240015240
(71) Applicant: Samsung Electronics Co., Ltd, Suwon-si, Gyeonggi-do 16677 (KR)
(72) Inventor: RYOU, Serim, 16678 Suwon-si (KR); RHEE, Seon Min, 16678 Suwon-si (KR)
(74) Representative: Arnold & Siedsma

(57) **Abstract**

A semiconductor design method and device are provided. The semiconductor design method may include inputting a first type of design data into a first neural network model; inputting a second type of design data into a second neural network model of a different type from the first neural network model; generating a fusion feature by fusing a calculation result of the second neural network model with a feature generated by calculation up through (and obtained from) a first layer of the first neural network model; inputting the fusion feature into a second layer of the first neural network that is after the first layer of the first neural network model; and performing a task related to routability of a circuit after calculation of the first neural network model based on the fusion feature is completed.

## Description

### BACKGROUND

### 1. Field

The present disclosure relates to a method and device with cross-network semiconductor design.

### 2. Description of Related Art

Semiconductor design mainly includes logical design and physical design. In the logical design process, specifications including functions and performance of semiconductor chips may be defined, the functions of chips may be implemented using logical gates and circuits, and simulations may be performed to check operation. In the logical design process, the register transfer level (RTL) code may be generated as a result, which may be written in a hardware description language such as Verilog or the VHSIC hardware description language (VHDL).

In the physical design process, the physical form of the chip to be actually manufactured may be designed based on the logical design. In the physical design process, to generate the geometry of the chip and generate design data that may be used in the actual manufacturing process, detailed processes such as floorplanning, power planning, placement, routing, and verification may be performed. Floorplanning may plan the overall layout of the chip, determine the position of the functional blocks, and optimize the connection between the blocks. Power planning may establish a plan for supplying and distributing power to chips and may design a power grid. Regarding placement, a process of placing circuit constituent elements (for example, unit elements, cells, and the like on a netlist) defined in the logical design into physical positions may be performed, and in a routing process, an electrical path connecting the placed circuit constituent elements may be generated. These detailed processes may be carefully performed to satisfy design rules or performance goals set in relation to the manufacture of the chip.

### SUMMARY

This Summary introduces a selection of concepts in a simplified form that are further described below in the Detailed Description. This Summary does not necessarily identify key features or essential features of the claimed subject matter; the claims below speak for themselves as to the range of claimed subject matter.

In one general aspect, a semiconductor design method is performed by one or more processors and the method includes: inputting a first type of design data into a first neural network model; inputting a second type of design data into a second neural network model, wherein the first neural network has an architecture configured for the first type of design data and the second neural network has an architecture configured for the second type of design data; generating a fusion feature by fusing a calculation result of the second neural network model with a feature generated by calculation up through a first layer of the first neural network, the feature being obtained from the first layer of the first neural network; inputting the fusion feature into a second layer of the first neural network model, wherein the second layer of the first neural network is after the first layer in the first neural network model; and performing a task related to routability of a circuit based on an output inferred by the first neural network model from the fusion feature.

The first neural network model may include a graph-based neural network model, the first type of design data may include graph-based circuit design data, the second neural network model may include an image-based neural network model, and the second type of design data may include image-based circuit design data.

The method may further include converting an image-based feature generated by calculation up through and obtained from a third layer of the second neural network model into a graph-based feature, wherein the fusion feature is generated by fusing the converted graph-based feature with the feature obtained from the first layer of the first neural network model for which calculation is completed.

The converting into the graph-based feature may include: obtaining grid cell information corresponding to the image-based feature; and combining the grid cell information and the image-based feature.

The converting into the graph-based feature may include: performing upsampling on the image-based feature; and converting the upsampled image-based feature into the graph-based feature.

The first neural network model may include an image-based neural network model, the first type of design data may include image-based circuit design data, the second neural network model may include a graph-based neural network model, and the second type of design data may include graph-based circuit design data.

The method may further include converting a graph-based feature for which calculation up through a third layer of the second neural network model is completed into an image-based feature, and the fusion feature may be generated by fusing the converted image-based feature with the feature obtained from the first layer of the first neural network.

The converting into the image-based feature may include: arranging the graph-based feature in an image form; and combining the arranged image and the feature obtained from the first layer of the first neural network.

The converting into the image-based feature may further include performing downsampling on the arranged image in consideration of a resolution of the feature obtained from the first layer of the first neural network.

The task related to the routability of the circuit may include a congestion prediction task or a design rule violation prediction task.

In another general aspect, a semiconductor design method may include: obtaining a graph-based first feature generated by calculation up through a first layer of a graph neural network (GNN), the first feature obtained from the first layer of the GNN; obtaining an image-based second feature generated by calculation up through a second layer of a convolutional neural network (CNN), the image-based second feature obtained from the second layer of the CNN; generating a third feature by fusing the first feature and the second feature; inputting the third feature to a layer of the GNN that is after the first layer of the GNN to perform prediction related to routability of a circuit in a first operation mode; and inputting the third feature to a layer of the CNN that is after the second layer of the CNN to perform prediction related to the routability of the circuit in a second operation mode.

The generating the third feature may include: performing upsampling on the second feature; obtaining grid cell information corresponding to the upsampled second feature; and combining the grid cell information and the upsampled second feature to generate the third feature.

The generating the third feature may include: arranging the first feature in an image form; performing downsampling on the arranged image; and combining the downsampled arranged image and the second feature to generate the third feature.

In yet another general aspect, a semiconductor design device includes: one or more processors; and one or more memory devices storing instructions configured to cause the one or more processors to perform a process including: inputting a first type of design data into a first neural network model, inputting a second type of design data into a second neural network model of a different architecture than the first neural network model, generating a fusion feature by fusing a calculation result of the second neural network model with a feature generated by calculation up through a first layer of the first neural network, the feature being obtained from the first layer of the first neural network, inputting the fusion feature into a second layer of the first neural network that is after the first layer of the first neural network model, and performing a task related to routability of a circuit after calculation of the first neural network model based on the fusion feature is completed.

The process may further include: converting an image-based feature generated by completed calculation up through a third layer of the second neural network model into a graph-based feature, the image-based feature being obtained from the third layer, and the fusion feature is generated by fusing the converted graph-based feature with the feature obtained from the first layer of the first neural network.

The converting into the graph-based feature may include: obtaining grid cell information corresponding to the image-based feature, and combining the grid cell information and the image-based feature.

The converting into the graph-based feature may include: performing upsampling on the image-based feature; and converting the upsampled image-based feature into the graph-based feature.

The process may further include converting a graph-based feature generated by calculation up through a third layer of the second neural network model into an image-based feature, the graph-based feature being obtained from the third layer, and generating the fusion feature by fusing the converted image-based feature with the feature obtained from the first layer of the first neural network.

The converting into the image-based feature may include: arranging the graph-based feature in an image form; and combining the arranged image and the feature obtained from the first layer of the first neural network model.

The converting into the image-based feature may further include performing downsampling on the arranged image in consideration of a resolution of the feature obtained from the first layer of the first neural network.

Other features and aspects will be apparent from the following detailed description, the drawings, and the claims.

### BRIEF DESCRIPTION OF THE DRAWINGS

FIG. 1 illustrates a semiconductor design device according to one or more embodiments.
FIGS. 2 to 5 illustrates an operation of a semiconductor design device according to one or more embodiments.
FIG. 6 illustrates a semiconductor design method according to one or more embodiments.
FIG. 7 illustrates a semiconductor design method according to one or more embodiments.
FIG. 8 illustrates a computing device according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

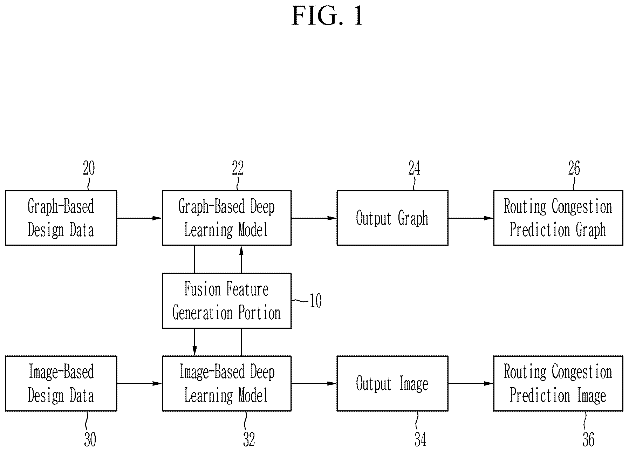

FIG. 1 illustrates a semiconductor design device according to one or more embodiments. The semiconductor design device may be implemented as one or more processors or computers, as described later.

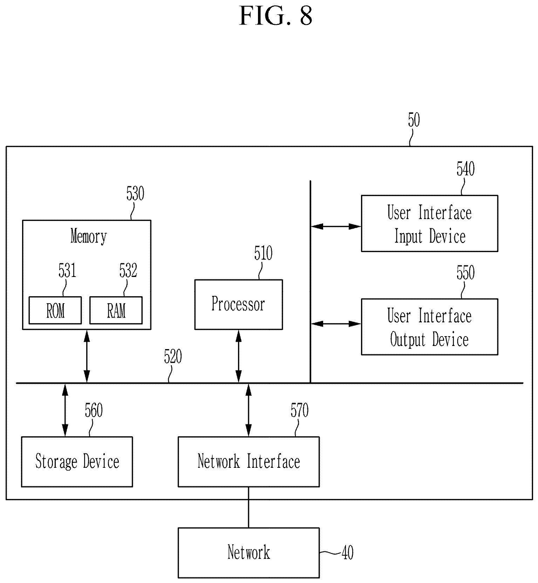

Referring to FIG. 1, a semiconductor design device may execute programs (in the form of instructions) loaded in one or more memory devices and executed through one or more processors. For example, the semiconductor design device may be implemented as a computing device 50 described in relation to FIG. 8. In this case, one or more processors may correspond to a processor 510 of the computing device 50, and one or more memory devices may correspond to a memory 520 of the computing device 50. The program may be executed by one or more processors to perform functions for predicting routability based on a deep learning model. In the present specification, these functions performed by the program are expressed in the term of "...portion" to logically distinguish them.

The semiconductor design device according to the embodiment may include a fusion feature generation portion 10, a graph-based deep learning model 22, and an image-based deep learning model 32.

The physical design process of a semiconductor chip typically includes detailed processes such as floorplanning, power planning, placement, routing, and verification. More detailed steps, for refinement, may be performed in the case of the placement and the routing. For example, after the floorplanning is performed, detailed steps of global placement, detailed placement, trial routing, global routing, and detailed routing verification may be performed ("routing" and "wiring" are used interchangeably). In the global placement step, the overall layout of the chip may be planned and the approximate positions of the functional blocks and standard cells may be determined. In the detailed placement step, circuit elements may be placed at their correct (final) positions on the chip, such correct/final positions being determined based on their approximate positions initially determined in the global placement. In short, global placement determines rough positions, and detailed placement determines precise/final positions. After the placement of the components is completed, initial/trial routing is attempted, which may involve test routing being performed to verify the validity of the placement and the validity of the routing strategy, and according to which the routing strategy may be adjusted when potential problem areas are identified before actual routing. Subsequently, in the non-trial global routing/wiring step, the electrical connection paths between respective constituent elements of the chip is substantially determined based on, for example, connection information in the netlist. In the detailed routing verification step, after the detailed routing is completed, it is possible to verify whether design rules are followed and performance goals are achieved.

It is important to note that in the detailed routing verification step, when a design rule is violated or a performance goal is not met, the design process may return to the previous stage and the optimization may be repeatedly performed, or, when the design process instead returns to the previous step and the level to be resolved is exceeded, the process may return to the floor planning step and may be required to change the overall layout of the chip. In this case, serious delays and overheads may occur in the semiconductor design. To minimize the delays and overheads, semiconductor design devices according to embodiments may predict routability (whether a goal/rule-satisfying final route can be derived) based on a deep learning model. The prediction of routability not only may (i) optimize the use of the limited space on a chip and provide placement and routing that comply with design rules, but it may also (ii) analyze routing congestion at an early design step to identify and adjust areas that could be problematic in later steps of the design process (before they are performed). Briefly, the deep learning model may be a type of neural network that extracts high-level features from input data through multiple processing layers and performs tasks such as classification, recognition, and prediction based on them. Details of the model follow.

Referring to FIG. 1, the graph-based deep learning model 22 may have a specialized neural network structure to process chip design information (for example, circuit information) encoded as graph data. The graph data, or just graph, may be nodes and edges connecting the nodes. Each node may have various adjacent nodes, so graph data may generally have an unstructured form. The graph-based deep learning model 22 may (i) learn new characteristics of a node by aggregating the characteristics of the node and information of its neighboring nodes based on graph data (that is, graph-based design data 20) in which chip design information is encoded, and may also (ii) select a neighboring node with high importance in this process or apply a weight to the connection of the node. In some embodiments, the graph-based deep learning model 22 may be implemented through various neural networks with GNN architectures, such as a graph neural network (GNN), a graph convolutional network (GCN), a graph attention network (GAT), and a graph sample and aggregation (GraphSAGE), or the like. Particularly, in some embodiments, the graph-based deep learning model 22 may be implemented through a heterogeneous graph neural network (hetero GNN). Here, the hetero GNN may be a form of GNN designed specifically for processing heterogeneous graphs that include different types of nodes and edges. In other words, the hetero GNN may model complex relationships between different types of nodes and edges.

The image-based deep learning model 32 may have a specialized neural network structure (architecture) to process chip design information (for example, circuit information) encoded as image data. Here, "image" refers to a grid of pixels where each pixel has a fixed neighboring pixel; the image data may generally have a standardized form. The image-based deep learning model 32 may be configured specifically to learn a spatial hierarchical structure and recognize and analyze visual patterns based on image data (that is, image-based design data 30) in which chip design information is encoded. In some embodiments, the image-based deep learning model 32 may be implemented through a convolutional neural network (CNN) or various neural networks having a CNN architecture.

If only a graph-based model is used for design, the inductive bias of spatially related data is not reflected in the neural network structure, which may cause unnecessary routing overload. On the other hand, when using only an image-based model for design, the relationship between spatially separated but topologically connected pixels, or the information between cells and nets, may not be used for learning, and when semiconductor chips have various sizes, chip design information must be encoded into an image of a specific size, so one pixel may correspond to (represent) multiple cells, resulting in information loss.

To solve this problem, semiconductor design devices according to embodiments described herein may encode chip design information into both graph data and image data, which may be used to generate the graph-based design data 20 and the image-based design data 30; routability may be predicted using both the graph-based deep learning model 22 and the image-based deep learning model 32. The fusion feature generation portion 10 may operate between the graph-based deep learning model 22 and the image-based deep learning model 32 to generate a fusion feature by fusing a feature calculated from the graph-based deep learning model 22 and a feature calculated from the image-based deep learning model 32, and provide the fusion/fused feature to the graph-based deep learning model 22 or the image-based deep learning model 32.

More specifically, the graph-based deep learning model 22 may (i) receive as inputs the graph-based design data 20 and receive the fusion feature (from the fusion feature generation portion 10) to (ii) output an output graph 24. The output graph 24 may be appropriately processed, converted, and used according to the purpose of implementation or analysis, for example, as a routing congestion prediction graph 26 to intensively analyze routing congestion among routabilities of a circuit. In this case, the fusion feature generation portion 10 may (i) generate a fusion feature by fusing an image-based calculation result of the image-based deep learning model 32 with a feature generated by calculation up through (and obtained from) a middle layer (described later) among the layers of the graph-based deep learning model (and obtained from the middle layer) 22, and (ii) provide the fusion feature to the graph-based deep learning model 22.

Meanwhile, the image-based deep learning model 32 may receive the image-based design data 30 and receive the fusion feature from the fusion feature generation portion 10 to output an output image 34. The output image 34 may be appropriately processed, converted, and used according to the purpose of implementation or analysis, for example, as a routing congestion prediction image 36 to intensively analyze routing congestion among routabilities of a circuit. In this case, the fusion feature generation portion 10 may (i) generate a fusion feature by fusing a graph-based calculation result of the graph-based deep learning model 22 with a feature generated by calculation up through (and obtained from) the middle layer (described later) among the layers of the image-based deep learning model 32 (and obtained from the middle layer), and (ii) provide the fusion feature to the image-based deep learning model 32.

In this way, by converting the graph-based feature into the image-based feature and fusing them, or converting the image-based feature into the graph-based feature and using the fused one as a feature, problems that may occur when only the graph-based or image-based model described above is used may be resolved.

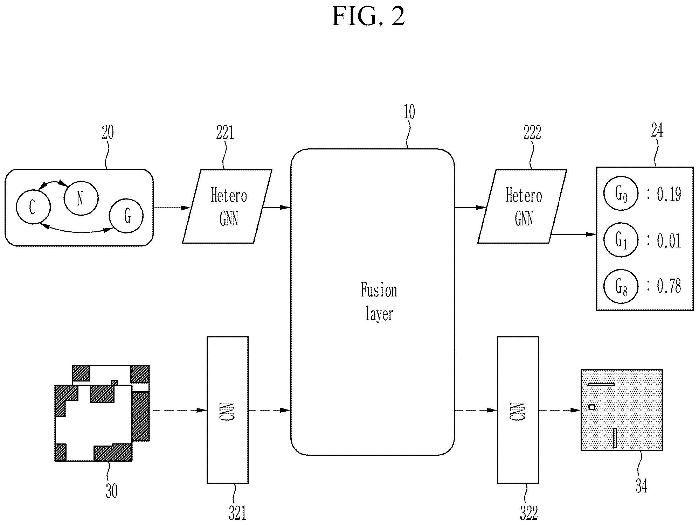

Operations of a semiconductor design device according to one or more embodiments are described next with reference to FIG. 2 to FIG. 5.

FIG. 2 to FIG. 5 illustrate operations of a semiconductor design device according to one or more embodiments.

Referring to FIG. 2, first and second graph-based deep learning models 221 and 222 may correspond to the graph-based deep learning model 22 in FIG. 1. First and second image-based deep learning models 321 and 322 may correspond to the image-based deep learning model 32 in FIG. 1. As described above, the deep learning models 221 and 222 and the deep learning models 321 and 322 may be of different types/architectures. That is, the deep learning models 221 and 222 may be included in (or be) a graph-based deep learning model, and the deep learning models 321 and 322 may be included (or be) in an image-based deep learning model.

The first graph-based deep learning model 221 has a layer that will be referred to as a "first layer" (not implying that it is the first layer, order-wise, of the model), and the second graph-based deep learning model 222 may have a layer that will be referred to as a "second layer" (not implying that it is the second layer, order-wise, of the model). Similarly, the first image-based deep learning model 321 has a layer that will be referred to as a "first layer" (not implying that it is, order-wise, the first layer in the model), and the second graph-based deep learning model 222 may have a layer that will be referred to as a "second layer" (not implying that, order-wise, it is the second layer of the model). That is to say, "first" and "second", in reference to layers of the aforementioned models, are reference labels and do not imply a specific number layers before/after the referenced layers. The first layers may be, for example, output layers of their respective models, and the second layers may be, for example, input layers of their respective models.

The semiconductor design device may input a first type of design data into the deep learning models 221 and 222. Here, the first type of design data may include graph-based circuit design data 20. In addition, the semiconductor design device may input a second type of design data into the deep learning models 321 and 322. Here, the second type of design data may include image-based circuit design data 30.

The semiconductor circuit design data may be expressed as, for example, a cell, a net, a pin, or the like. A cell is a unit representing the basic functions of a circuit, and for example, may be a single constituent element such as a logic gate (AND, OR, NOT, or the like), a flip-flop, or a latch, or a set of more complex functions configured in a combination of these constituent elements. The net defines the path of a signal within a circuit and may indicate an electrical connection between two or more cells. A pin, as an interface of a cell, corresponds to a point at which a signal is received from outside the cell or a point at which a signal is output from the cell; each cell may have one or more input pins and one or more output pins. This topological information may be encoded in graph form. The first type of design data may correspond to the graph form of data. In addition, the deep learning model 221 may use a graph constructed using the topological information as an input.

Meanwhile, after the placement step of the design process, the position information where the cells are placed may be processed in the form of an image, and for example, one pixel may be expressed as a grid cell (or G-cell), and a set of grid cells included in one net may be expressed as a grid net (or G-net). Based on this geometric grid cell information, the occupancy or density (e.g., number of components) represented by each cell may be encoded in the form of an image. The second type of design data may correspond to this image. In addition, the deep learning model 321 may use an image of the geometric feature as an input.

Particularly, the deep learning models 221 and 222 may be implemented as hetero GNNs, so they may be capable of processing graphs configured with different types of nodes and edges, such as cells, nets, pins, and grid cells. In this case, attributes such as the cell position, node name (instance name/identifier), standard cell and IP (intellectual property identifier) name, cell size, and the number (degree) of connected nets may be used as graph features about a cell; attributes such as the net name and the number of connected cells may be used as graph features about the net; and attributes such as the pin name and the index of connected cells and nets may be used as graph features about the pin.

The deep learning models 321 and 322 may be implemented as CNNs, and an image representing the positions of macros as 0s and 1s as image features related to the macros is used as an input to the models, or an image representing the distribution information of the net as an image feature related to the rectangular uniform wire density (RUDY) may be used as an input to the models.

The semiconductor design device may generate a fusion feature by fusing the image-based calculation result of the deep learning model 321 with the graph-based feature generated by calculation up through the first layer of the deep learning model 221 (and obtained from the first layer) through the fusion feature generation portion 10. Subsequently, the semiconductor design device may input the fusion feature into the second layer of the deep learning model 222, which comes after the first layer of the deep learning model 221. After the calculation of the deep learning models 221 and 222 is completed, the semiconductor design device may perform a task related to the routability of the circuit by using the output graph 24. Meanwhile, the semiconductor design device may input the second type of design data 30 to the deep learning models 321 and 322. Here, the second type of design data may include the image-based circuit design data. In addition, the semiconductor design device may input the first type of design data 20 into the deep learning models 221 and 222. Here, the first type of design data may include the graph-based circuit design data.

The semiconductor design device may generate a fusion feature by fusing the calculation result of the deep learning model 221 with the feature generated by calculation up through the first layer of the deep learning model 321 (and obtained from the first layer), and may do so through the fusion feature generation portion 10. Subsequently, the semiconductor design device may input a fusion feature into the second layer of the deep learning model 322. After the calculation of the deep learning models 321 and 322 is completed, the semiconductor design device may perform a task related to the routability of the circuit by using the output image 34.

That is, the fusion feature generation portion 10 may convert an image-based feature into a graph form or convert a graph-based feature into an image form so that information may be exchanged between the deep learning models 221 and 222 and the deep learning models 321 and 322, whether for learning/training or for inference. Accordingly, the performance of the model may be improved by encoding the information of the semiconductor circuit in various forms, preferably without loss.

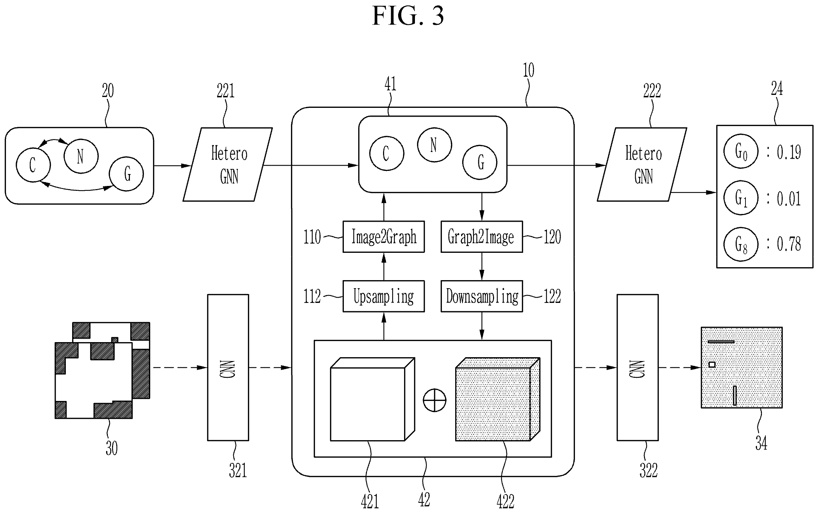

Referring to FIG. 3, the first type of design data (e.g., graph-based circuit design data 20) and the second type of design data (e.g., image-based circuit design data 30) may be processed by sharing an image-based feature with a grid cell feature corresponding to a graph-based feature via the first and second layers of the deep learning models 221 and 222 and via the first and second layers of the deep learning models 321 and 322. Since the pixel information of the image is encoded into the GNN in the form of a grid cell, an image-to-graph conversion module 110 may upsample the image to match the original image size, combine it with the grid cell feature, and then transmit it to the next graph layer (e.g., the second layer of the second deep learning model 222). A graph-to-image conversion module 120 may convert the graph into an image form, down-sample it to match the size of the image-based feature, combine it with the existing image-based feature, and then transmit it to the next image layer (e.g., the second layer of the second deep learning model 322).

That is, the fusion feature generation portion 10 may convert an image-based feature 421, generated by calculation up through (and obtained from) the third layer of the deep learning model 321, into a graph-based feature through the image-to-graph conversion module 110. In addition, the fusion feature generation portion 10 may generate a fusion feature 41 by fusing the converted graph-based feature with the feature obtained from the first layer of the deep learning model 221. In some embodiments, as necessary, the fusion feature generation portion 10 may perform upsampling on the image-based feature 421 through an upsampling module 112. In this case, the image-to-graph conversion module 110 may convert the upsampled image-based feature into a graph-based feature.

Meanwhile, the fusion feature generation portion 10 may convert a graph-based feature 411, generated by calculation up through (and obtained from) the third layer of the deep learning model 221, into an image-based feature 422 through the graph-to-image conversion module 120. In addition, the fusion feature generation portion 10 may generate a fusion feature 42 by fusing the converted image-based feature 422 with the feature 421 obtained from the first layer of the deep learning model 321. In some embodiments, as necessary, the fusion feature generation portion 10 may perform downsampling on the result of the graph-to-image conversion module 120 based on the resolution of the feature 421 obtained from the first layer of the deep learning model 321 through the downsampling module 122.

In the case of routing congestion prediction, when the result thereof is to be obtained in the form of an image (an image that can indicate where routing congestion might occur), learning may be performed by applying a mean squared error (MSE) loss function to the output image 34. When the routing congestion prediction result is to be obtained in the form of a graph (a graph indicating routing congestion), learning may be performed by applying the MSE loss function to the predicted value of the grid cell node as shown in the output graph 24 (for example, the predicted value of grid cell G₀ is 0.19, the predicted value of grid cell G₁ is 0.01, and the predicted value of grid cell G₈ is 0.78). For routing congestion prediction, the RMSE (root MSE) was obtained as shown in Table 1 below when only GNN was used, when only CNN was used, and when GNN and CNN were mixed and used according to the embodiments.

**Table 1**

| | GNN | CNN | GNN + CNN |
|---|---|---|---|
| Image (grid cell) RMSE | 0.0180 | 0.0019 | 0.0017 |

As confirmed by empirical experimentation, performance is excellent when the GNN and the CNN are mixed and used. The task related to determining the routability of a circuit that may be performed using the semiconductor design device may include a congestion prediction task or a design rule violation prediction task. By changing (through inter-model exchange) the input and output features, it may be possible to perform several types of routing-related tasks. For example, when the congestion value (that was the target for the input data used in the congestion prediction task) is used as an input value and the learning target is predicted as a design rule violation (as expressed as an image), the design rule violation prediction task may be performed using the same model structure. Table 2 shows examples of routability-related tasks of a circuit that may be performed using the semiconductor design device, depending on implementation.

**Table 2**

| | |
|---|---|
| Congestion prediction | Task that predicts routing congestion before detailed routing step and has information about quality of placement |
| | Input: Information of cells, nets and pins after placement (optionally add cell density, RUDY, macros, and the like) |
| | Output: Congestion value in each grid |
| Design rule violation prediction | Predicts number of design rule violations in grid after global routing |
| | Input: Add congestion value to input used in congestion prediction |
| | Output: Number of rule violations in each grid |
| Net wirelength prediction | Net wirelength is predicted, and as indicator of performance of final chip, output node type of model is used as net, and wirelength of corresponding net is output in regression form |
| | Input: Same input as congestion prediction |
| | Output: Half-perimeter wirelength (HPWL) |

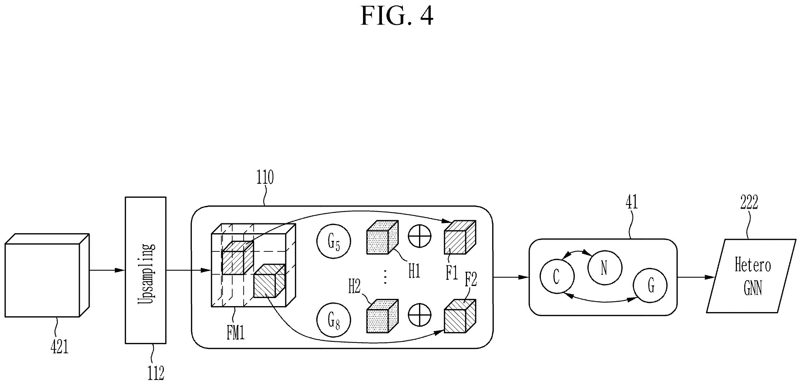

Referring to FIG. 4, the image-to-graph conversion module 110 may obtain grid cell information from the feature map FM1 corresponding to the image-based feature, in order to convert the image-based feature (the feature 421 obtained from the first layer of the deep learning model 321) into the graph-based feature. Here, the feature map FM1 may be a feature 421 generated by calculation up through (and obtained from) the first layer of the deep learning model 321, or may be a feature for which upsampling has been performed through the upsampling module 112. The image-to-graph conversion module 110 may convert an image-based feature into a graph-based feature by combining grid cell information and an image-based feature, and from that the fusion feature 41 may be generated. Here, the combining of the grid cell information and the image-based feature may be implemented by at least one of a concatenation operation, a sum operation, and an attention operation for the grid cell information and the image-based feature. The image-to-graph conversion module 110 may transmit the generated fusion feature 41 to the deep learning model 222. That is, the graph-based features H1 and H2 corresponding to the grid cells G₅ and G₈ are combined with the image-based features F1 and F2, respectively, and accordingly, the image-based features F1 and F2 may eventually be generated as the graph-based fusion feature 41. For the grid cells G₅ and Gs, the corresponding position on the image may be known using the grid cell index (for example, a node identifier), so it may be specified from the properties of the grid cells G₅ and G₈ that the image-based features corresponding to the grid cells G₅ and G₈ are the features F1 and F2.

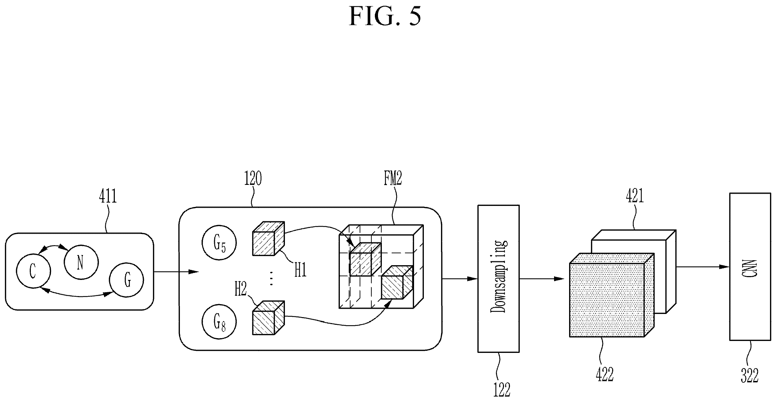

Referring to FIG. 5, as described in more detail below, the graph-to-image conversion module 120 may generate the feature map FM2 by arranging the graph-based features in the form of an image, in order to convert the graph-based feature (the feature 411 obtained from the first layer of the deep learning model 221) into the image-based feature. Thereafter, the arranged image 422 downsampled through the downsampling module 122 and the feature 421 (obtained from the first layer of the deep learning model 321) may be combined to generate the fusion feature 42. Here, the combining of the downsampled arranged image 422 and the feature 421 may be implemented by at least one of a concatenation operation, a sum operation, and an attention operation for the downsampled arranged image 422 and the feature 421. The fusion feature generation portion 10 may transmit the generated fusion feature 42 to the deep learning model 322 which may perform an inference based thereon to generate an output from its output layer.

That is, the graph-based features H₁ and H₂ respectively corresponding to the grid cells G5 and G8 may be rearranged in an image form and reshaped as a tensor, and downsampling, for example, max pooling, may be applied to match the resolution of the CNN layer 322. In this way, the feature 422 generated by stacking the graph-based features at corresponding positions on the image may be combined with the image-based feature 421 to eventually be generated as the image-based fusion feature 42.

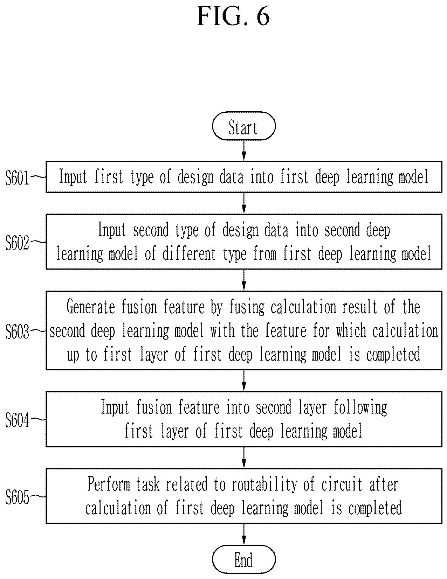

FIG. 6 illustrates a semiconductor design method according to one or more embodiments.

Referring to FIG. 6, the semiconductor design method may include inputting a first type of design data into a first deep learning model (S601), inputting a second type of design data into a second deep learning model of a different type from the first deep learning model (S602), generating a fusion feature by fusing a calculation result of the second deep learning model with the feature obtained from the first layer of the first deep learning model (S603), inputting a fusion feature into a second layer downstream from the first layer of the first deep learning model (S604), and performing a task related to the routability of the circuit after the calculation of the first deep learning model is completed (S605).

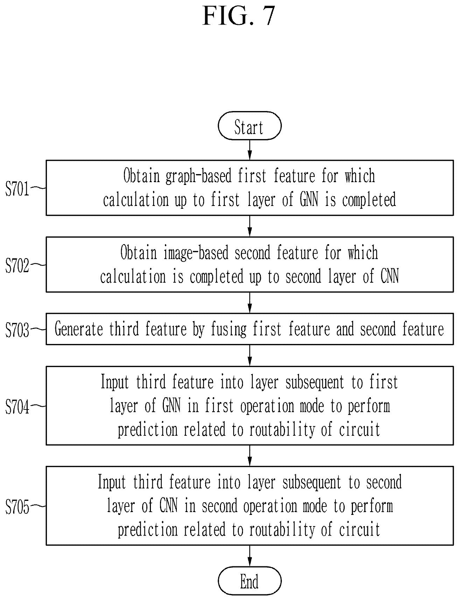

FIG. 7 illustrates a semiconductor design method according to one or more embodiments.

Referring to FIG. 7, the semiconductor design method according to the embodiment may include obtaining a graph-based first feature generated by calculation up through (and obtained from) the first layer of the GNN (S701), obtaining an image-based second feature generated by calculation up through (and obtained from) the second layer of the CNN (S702), generating the third feature by fusing the first feature and the second feature (S703), inputting the third feature into a layer of the GNN that is after the first layer of the GNN in a first operation mode to perform a prediction indicating the routability of the circuit (S704), and inputting the third feature into a layer of the CNN that is after the second layer of the CNN in a second operation mode to perform a prediction related to the routability of the circuit (S705).

Here, the first operation mode may be an operation mode in which the routability is finally obtained as graph data, and the second operation mode may be an operation mode in which the routability is finally acquired as image data. For example, the semiconductor design device may be operated in the first operation mode when it is desired for the prediction result for routing congestion to be obtained in the form of a graph, and the semiconductor design device may be operated in the second operation mode when it is desired for prediction result for routing congestion to be obtained in the form of an image.

In the first operation mode, step S703 may include performing upsampling on the second feature, obtaining grid cell information corresponding to the upsampled second feature, and generating a third feature by combining the grid cell information with the upsampled second feature. Meanwhile, in the second operation mode, step S703 may include arranging the first feature in the form of an image, performing downsampling on the arranged image, and generating the third feature by combining the downsampled arranged image and the second feature.

In either case, since the graph-based feature is converted into the image-based feature and fused, or the image-based feature is converted into the graph-based feature and fused, it is possible to minimize delays and overhead in design and improve the performance of routability prediction while avoiding problems that may occur when using only the graph-based model or using only the image-based model described above.

FIG. 8 illustrates a block diagram of a computing device according to one or more embodiments.

Referring to FIG. 8, the semiconductor design method and device according to the embodiments may be implemented using a computing device 50. With the descriptions above, the persons skilled in the art may readily form source code, for example, analogous to the descriptions above, and the source code may be compiled, interpreted, etc., into executable instruction. The executable instructions, when executed by the computing device 50 will cause the computing device 50 to perform operations consistent with the operations described above. Moreover, although application to circuit design is described as an example application, it will be appreciated that the computing device 50 configured as described above will render the computing device 50 itself more efficient at performing a variety of applications and functions.

The computing device 50 may include at least one of a processor 510 (in practice, on one or more processors of any variety), a memory 530, a user interface input device 540, a user interface output device 550, and a storage device 560 in communication through a bus 520. The computing device 50 may also include a network interface 570 electrically or wirelessly connected to the network 40. The network interface 570 may transmit or receive signals with other entities through the network 40.

The processor 510 may be implemented in various types, such as a central processing unit (CPU), an application processor (AP), a graphic processing unit (GPU), a natural processing unit (NPU), a micro controller unit (MCU), and/or the like, and may be any semiconductor device that executes instructions stored in the memory 530 or the storage device 560. The processor 510 may be configured to implement the functions and methods described above with respect to the embodiments.

The memory 530 and the storage device 560 may include various types of volatile or non-volatile storage media. For example, the memory may include a read-only memory (ROM) 531 and a random access memory (RAM) 532. In the present embodiment, the memory 530 may be positioned inside or outside the processor 510, and the memory 530 may be connected to the processor 510 through various known members.

In some embodiments, at least some of the components or functions of the semiconductor design method and device according to the embodiments may be implemented as a program or software (in the form of instructions) executed on the computing device 50, and the program or software may be stored in a computer-readable medium. Specifically, the computer-readable medium according to the embodiment may be one writing the program for executing the steps included in the semiconductor design method according to the embodiments to a computer including the processor 510 that executes the program or instruction stored in the memory 530 or the storage device 560.

In some embodiments, at least some of the components or functions of the semiconductor design method and device according to the embodiments may be implemented using hardware or circuits of the computing device 50, or may be implemented using separate hardware or circuits that may be electrically connected to the computing device 50.

According to the embodiments described so far, delays and overheads due to iterative optimization methods in conventional semiconductor design may be minimized by predicting routability based on a deep learning model. In addition, it is possible to provide performance improvements in routability prediction, by encoding design data of semiconductor chips into various types to train a deep learning model.

The computing apparatuses, the electronic devices, the processors, the memories, the displays, the information output system and hardware, the storage devices, and other apparatuses, devices, units, modules, and components described herein with respect to FIGS. 1-8 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocesser, single-instruction multiple-data (SIMD) multiprocesser, multiple-instruction single-data (MISD) multiprocesser, and multiple-instruction multiple-data (MIMD) multiprocesser.

The methods illustrated in FIGS. 1-8 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), a card type memory such as multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. A semiconductor design method performed by one or more processors, the method comprising:
inputting a first type of design data into a first neural network model;
inputting a second type of design data into a second neural network model, wherein the first neural network model has an architecture configured for the first type of design data and the second neural network model has an architecture configured for the second type of design data;
generating a fusion feature by fusing a calculation result of the second neural network model with a feature generated by calculation up through a first layer of the first neural network model, the feature being obtained from the first layer of the first neural network model;
inputting the fusion feature into a second layer of the first neural network model, wherein the second layer of the first neural network model is after the first layer of the first neural network model; and
performing a task related to routability of a circuit based on an output inferred by the first neural network model from the fusion feature.

2. The semiconductor design method of claim 1, wherein
the first neural network model includes a graph-based neural network model,
the first type of design data includes graph-based circuit design data,
the second neural network model includes an image-based neural network model, and
the second type of design data includes image-based circuit design data.

3. The semiconductor design method of claim 2, further comprising
converting an image-based feature generated by calculation up through and obtained from a third layer of the second neural network model into a graph-based feature, and
wherein the fusion feature is generated by fusing the converted graph-based feature with the feature obtained from the first layer of the first neural network model.

4. The semiconductor design method of claim 3, wherein the converting into the graph-based feature includes:
obtaining grid cell information corresponding to the image-based feature; and
combining the grid cell information and the image-based feature.

5. The semiconductor design method of claim 3 or 4, wherein the converting into the graph-based feature includes:
performing upsampling on the image-based feature; and
converting the upsampled image-based feature into the graph-based feature.

6. The semiconductor design method of any one of the previous claims, wherein
the first neural network model includes an image-based neural network model,
the first type of design data includes image-based circuit design data,
the second neural network model includes a graph-based neural network model, and
the second type of design data includes graph-based circuit design data.

7. The semiconductor design method of claim 6, further comprising
converting a graph-based feature generated by calculation up through a third layer of the second neural network model into an image-based feature, and
wherein the fusion feature is generated by fusing the converted image-based feature with the feature obtained from the first layer of the first neural network model.

8. The semiconductor design method of claim 7, wherein the converting into the image-based feature includes:
arranging the graph-based feature in an image form; and
wherein the generating the fusion feature comprises:
generating the fusion feature based on the arranged image and the feature obtained from the first layer of the first neural network;
wherein preferably the converting into the image-based feature further includes performing downsampling on the arranged image based on a resolution of the feature obtained from the first layer of the first neural network model.

9. The semiconductor design method of any one of the previous claims, wherein the task related to the routability of the circuit includes a congestion prediction task or a design rule violation prediction task.

10. A semiconductor design device comprising:
one or more processors; and
one or more memory devices storing instructions configured to cause the one or more processors to perform a process comprising:
inputting a first type of design data into a first neural network model,
inputting a second type of design data into a second neural network model of a different architecture than the first neural network model,
generating a fusion feature by fusing a calculation result of the second neural network model with a feature generated by calculation up through a first layer of the first neural network model, the feature being obtained from the first layer of the first neural network model,
inputting the fusion feature into a second layer of the first neural network that is after the first layer of the first neural network model, and
performing a task related to routability of a circuit after calculation of the first neural network model based on the fusion feature is completed.

11. The semiconductor design device of claim 10, wherein the process further comprises:
converting an image-based feature generated by completed calculation up through a third layer of the second neural network model into a graph-based feature, the image-based feature being obtained from the third layer, and
wherein the fusion feature is generated by fusing the converted graph-based feature with the feature obtained from the first layer of the first neural network model.

12. The semiconductor design device of claim 11, wherein the converting into the graph-based feature includes:
obtaining grid cell information corresponding to the image-based feature, and
combining the grid cell information and the image-based feature.

13. The semiconductor design device of claim 11 or 12, wherein the converting into the graph-based feature includes:
performing upsampling on the image-based feature; and
converting the upsampled image-based feature into the graph-based feature.

14. The semiconductor design device of any one of claims 10-13, wherein
the process further comprises converting a graph-based feature generated by calculation up through a third layer of the second neural network model into an image-based feature, the graph-based feature being obtained from the third layer, and
generating the fusion feature by fusing the converted image-based feature with the feature obtained from the first layer of the first neural network model.

15. The semiconductor design device of claim 14, wherein the converting into the image-based feature includes:
arranging the graph-based feature in an image form; and
wherein the generating the fusion feature comprises:
generating the fusion feature based on the arranged image and the feature obtained from the first layer of the first neural network model;
wherein preferably the converting into the image-based feature further includes performing downsampling on the arranged image based on a resolution of the feature obtained from the first layer of the first neural network model.
